# FASCICULE DE BREVET EUROPEEN

(11) **EP 0 793 609 B1**
(45) Date de publication et mention de la délivrance du brevet: **26.08.1998**
(21) Numéro de dépôt: 95941753.6
(22) Date de dépôt: 01.12.1995
(51) Int. Cl.: B65G 13/075

(54) **LIMITEUR DE VITESSE POUR CAISSES OU PALETTES DIVERSEMENT CHARGEES, SUSCEPTIBLES DE SE DEPLACER PAR GRAVITE SUR UN PLAN INCLINE FORME DE ROULEAUX OU GALETS**
GESCHWINDIGKEITSBEGRENZER FÜR KISTEN ODER PALETTEN, DIE UNTERSCHIEDLICH BELADEN SIND UND DURCH SCHWERKRAFT AUF EINER GENEIGTEN, MIT ROLLEN VERSEHENEN, EBENE BEWEGT WERDEN
SPEED LIMITER FOR CASES OR PALLETS CARRYING VARIOUS LOADS AND WHICH ARE GRAVITY DISPLACEABLE ON AN INCLINED PLANE OF ROLLERS OR WHEELS

(30) Priorité: 02.12.1994 FR 9414681
(43) Date de publication de la demande: 10.09.1997
(73) Titulaire: SIPA ROLLER, 85006 Mouilleron-le-Captif (FR)
(72) Inventeur: FAISANT, Gilles, F-85100 Les Sables-d'Olonne (FR)
(74) Mandataire: Phélip, Bruno
(86) Numéro de dépôt international: FR9501588
(87) Numéro de publication internationale: WO9616883

(56) Documents cités:
- DE-A- 3 904 284

## Description

La présente invention concerne un dispositif qui permet de limiter la vitesse de caisses ou palettes diversement chargées, susceptibles de se déplacer par gravité sur un plan incliné formé de rouleaux ou galet selon le préambule de la revendication 1.

Ce dispositif limiteur de vitesse est généralement utilisé dans les installations de convoyage ou de stockage dynamique. Pour contrôler la vitesse de ces caisses ou palettes, sur le chemin de roulement constitué de rouleaux ou galets, il est connu d'utiliser des dispositifs de freinage du type à inertie. Un tel dispositif de freinage est notamment décrit dans le document DE-A-39 04 284. Un autre dispositif de freinage (DE-U-69 29 711) comporte un tambour muni d'un revêtement adhérent qui est directement en contact avec la caisse ou palette ou indirectement par le biais d'un ou deux rouleaux qui sont interposés entre la caisse ou palette et ledit tambour.

Ce tambour est monté sur un arbre qui est parallèle à l'axe des rouleaux du convoyeur et il est lié par un support au bâti du convoyeur. En position repos, c'est-à-dire en l'absence de caisse ou palette, le tambour est maintenu légèrement en saillie par rapport au plan de convoyage, au moyen d'un organe élastique. Il s'éclipse automatiquement lors du passage d'une caisse ou d'une palette et l'organe élastique établit une pression de contact entre le tambour et la caisse ou palette qui se traduit, sous l'effet de l'adhérence, par la mise en mouvement de rotation dudit tambour.

Dans le cas d'un montage indirect, une pression est établie sur les rouleaux de transmission de mouvement, lesquels rouleaux, qui sont montés avec un certain jeu sur le bâti, sont eux aussi, en l'absence de caisse ou palette, légèrement en saillie par rapport au plan de circulation des caisses ou palettes.

La rotation du tambour met en oeuvre, à partir d'une certaine vitesse, un système de freinage par le biais de masselottes qui sont entraînées en rotation au moyen d'un ou plusieurs trains épicycloïdaux logés à l'intérieur du tambour.

A partir d'une certaine vitesse linéaire qui est par exemple de l'ordre de 0,25 à 0,30 m/seconde, les masselottes entrent en contact avec la paroi interne du tambour et l'ensemble a tendance à s'immobiliser, retenu par l'arbre central et en particulier le premier porte-satellite.

Le dispositif de freinage constitue, à partir d'une vitesse linéaire prédéterminée, de l'ordre de 0,25 à 0,30 m/seconde, un organe de freinage absolu. En effet, cette vitesse correspond à la vitesse de blocage et d'immobilisation totale du tambour. Lorsqu'une charge, c'est-à-dire une caisse ou une palette, se déplace sur le plan incliné, elle est automatiquement freinée. L'efficacité de ce freinage dépend des forces d'adhérence entre le tambour et son vecteur d'entraînement, c'est-à-dire la charge s'il s'agit d'un entraînement direct ou le ou les rouleaux, s'il s'agit d'un entraînement indirect.

La présente invention selon la revendication 1 propose un limiteur de vitesse qui permet de modifier la pression entre le tambour et son vecteur d'entraînement, ceci en fonction de la vitesse de rotation dudit tambour, tout en limitant cette pression à une valeur maximale préétablie afin d'éviter tout risque de détérioration du tambour et/ou du mécanisme de freinage, laquelle modification de pression est obtenue par des moyens élastiques mis en oeuvre par le mouvement du support lors d'un freinage important.

En fait, la pression entre le tambour et son vecteur d'entraînement présente plusieurs niveaux. Il y a un premier niveau de pression et d'adhérence, qui résulte de la simple présence du vecteur d'entraînement, même s'il est statique. L'adhérence qui résulte de cette pression, entre le tambour et son vecteur permet, lorsque le vecteur est en mouvement, d'entraîner le tambour en rotation. La résistance du tambour à cet entraînement croît en même temps que sa vitesse de rotation, ce qui fait que dès que cette résistance devient plus forte que la force d'entraînement, un phénomène de glissement s'instaure.

En proposant des moyens pour faire varier la pression entre le tambour et son vecteur d'entraînement, l'invention établit plusieurs niveaux de pression et d'adhérence, conférant au limiteur de vitesse un caractère universel c'est-à-dire qu'il devient capable de freiner tous types de charges, des charges dont les poids sont très différents et dont les vitesses de déplacement sur le convoyeur ou le couloir sont également très différentes ; le but du limiteur de vitesse étant de maintenir la vitesse en-dessous d'un seuil préétabli sans toutefois entraver le déplacement des charges.

Le limiteur de vitesse selon un mode de réalisation de l'invention est solidaire du bâti au moyen d'un support qui comprend des poutres latérales constituées de bras, lesquelles poutres sont du type de celles décrites dans le document DE-A-39 04 284.

Les bras constituant la poutre support sont articulés l'un par rapport à l'autre et sont munis de goussets qui portent : - une butée pour limiter l'amplitude du mouvement des bras l'un par rapport à l'autre dans un sens et - un organe élastique en forme de ressort qui contrarie le mouvement desdits bras.

Selon l'invention, les bras des poutres sont soutenus avec un certain degré de liberté dans un berceau qui est solidaire du bâti du convoyeur et qui organise leurs mouvements, lesquels mouvements sont contrariés par deux organes élastiques : - un premier organe élastique qui présente la caractéristique d'être particulièrement souple pour permettre l'éclipsage du tambour lors du passage d'une charge et pour assurer la fonction de maintien du contact entre le tambour freineur et son vecteur d'entraînement avec une pression suffisante pour permettre l'entraînement du tambour grâce à un premier niveau d'adhérence, et - un second organe élastique, dont la résistance à l'allongement est plus importante, qui fixe un second niveau d'adhérence plus élevé que le premier, lequel organe élastique est mis en oeuvre lorsque, sous l'effet de l'accroissement de la vitesse du vecteur d'entraînement, les deux bras basculent autour de leur articulation provoquant, par l'intermédiaire de leurs goussets, un allongement desdits organes élastiques.

Selon l'invention, le second organe élastique est en forme de ressort hélicoïdal monté à ses extrémités sur les goussets des bras d'une même poutre, avec un jeu suffisant au moyen de trous oblongs ou autres, afin de rester inactif lorsque le tambour passe de la position inactive à la position dans laquelle il est d'une part éclipsé par la charge et, d'autre part, maintenu en contact avec cette dernière par le premier organe élastique qui est en forme de ressort hélicoïdal également.

Toujours selon l'invention, les bras constituant les poutres supports comportent, à leurs extrémités, des tiges transversales parallèles à l'axe de l'arbre du tambour, lesquelles tiges sont positionnées sur le berceau fixé sur le bâti, lequel berceau comporte des fenêtres dont les dimensions sont supérieures au diamètre desdites tiges de façon à accorder à l'une au moins d'entre elles, une liberté de mouvement lui permettant de se déplacer de façon contrôlée, au moins dans un plan sensiblement parallèle au plan de déplacement de la charge.

Toujours selon l'invention, l'arbre du tambour de freinage et du mécanisme, comporte des moyens permettant de solidariser ses deux bras latéraux porteurs, de façon à réaliser une réaction symétrique desdits bras lorsque la vitesse du vecteur d'entraînement provoque un mouvement de rotation desdits bras et la mise en oeuvre du second organe élastique.

Toujours selon l'invention, les tiges des bras sont, de préférence, du type escamotables de façon élastique, pour faciliter le montage et le démontage du limiteur de vitesse dans son berceau.

L'invention concerne également une installation de stockage dynamique comportant au moins un limiteur de vitesse selon l'invention et en particulier, entre les rouleaux formant le plan incliné de l'installation et le tambour du limiteur de vitesse, des galets ou rouleaux intermédiaires en contact d'une part avec un même rouleau du plan incliné et les rouleaux adjacents à ce dernier et, d'autre part, avec le tambour du limiteur de vitesse, lorsque ce dernier est en régime normal de freinage.

Toujours selon l'invention, l'installation peut également comporter, en aval du limiteur de vitesse, un galet ou rouleau intermédiaire supplémentaire qui fait office d'organe d'accouplement entre les rouleaux situés en aval dudit limiteur de vitesse.

L'invention sera encore détaillée à l'aide de la description suivante et des dessins annexés, donnés à titre indicatif, et dans lesquels :
- la figure 1 représente en perspective, un dispositif limiteur de vitesse selon l'invention ;
- la figure 2 représente, schématiquement, en coupe, le dispositif limiteur représenté figure 1, porté par un berceau ;
- la figure 3 est une vue de côté du dispositif limiteur selon l'invention, porté par un berceau, représenté sans les moyens de verrouillage de l'arbre du tambour sur les bras supports ;
- la figure 4 représente, schématiquement, un dispositif limiteur de vitesse intégré dans un plan incliné, dont le tambour est disposé de façon à être directement en contact avec une palette ;
- la figure 5 représente un dispositif limiteur de vitesse intégré dans un plan incliné, monté de façon indirecte, c'est-à-dire que le tambour est entraîné par deux rouleaux qui sont en contact avec une palette;
- la figure 6 représente une variante de la figure 5 dans laquelle le dispositif limiteur de vitesse est en contact avec un seul rouleau ;
- la figure 7 représente, de façon schématique, l'une des extrémités du second organe élastique lorsque dans l'exemple de la figure 3, le limiteur de vitesse est en position repos, c'est-à-dire qu'il n'est pas soumis à l'action d'une charge ;
- la figure 8 représente, toujours schématiquement, l'extrémité du second organe élastique, lorsque comme représenté figures 4 à 6, le dispositif limiteur est en position active, le tambour étant entraîné en rotation à une vitesse inférieure à sa vitesse de blocage ;
- la figure 9 représente l'extrémité du second organe élastique, lorsque ce dernier est actif ;
- la figure 10 représente un dispositif limiteur de vitesse vu de dessus, positionné dans un berceau, selon un second mode de réalisation ;
- la figure 11 représente une vue de côté du dispositif représenté figure 10 ;
- la figure 12 représente le berceau de la figure 11, seul, vu de côté ;
- la figure 13 représente une portion d'installation de stockage dynamique et en particulier une portion de convoyeur montrant un exemple de montage indirect du limiteur de vitesse ;
- la figure 14 représente le limiteur de vitesse dans une installation correspondant à la figure 13, dans une configuration de freinage intense mettant en oeuvre le second niveau d'adhérence.

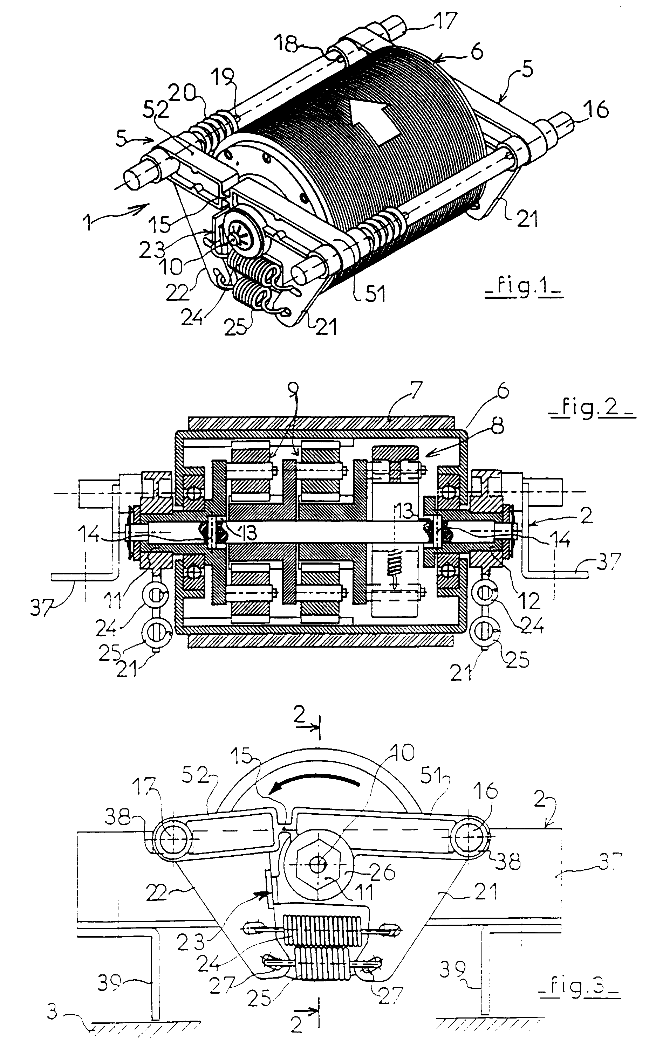

Le limiteur de vitesse, représenté figures 1 à 3, est constitué d'un support 1 porté, au moyen d'un berceau 2, par le bâti 3 du convoyeur ou du couloir de stockage dynamique.

Ce support 1 comprend des poutres latérales 5 qui soutiennent le tambour de freinage 6.

Ce tambour de freinage 6 comporte un bandage 7 réalisé en matériau adhérent, et il renferme un mécanisme de freinage 8 constitué de masselottes et un double train épicycloïdal 9 qui réalise l'entraînement en rotation de ces masselottes, à l'intérieur du tambour.

Ce tambour et son mécanisme de freinage sont montés sur un arbre central 10 qui est porté par les poutres latérales 5 et en particulier par des bras qui constituent lesdites poutres. Cet arbre 10 se situe à mi-longueur des poutres 5. Le plan médian de ces dernières se situe entre l'arbre 10 et la périphérie du tambour 6 qui est en contact avec la charge. La distance entre l'arbre 10 et le plan médian des poutres 5 correspond sensiblement au tiers du rayon du tambour 6.

Les poutres 5 se divisent chacune en deux bras 51 et 52. Les bras 51, dits bras amont sont plus longs que les bras 52 ; ils portent le mécanisme de freinage 1. Les bras 52, dits bras aval, retiennent les bras amont.

L'arbre 10 est solidaire des bras 51 par l'intermédiaire des douilles 11 et 12 qui constituent les paliers latéraux du tambour 6.

La douille 11 constitue la partie fixe des trains épicycloïdaux 9. En effet, elle constitue le porte-satellite du premier train épicycloïdal.

Ces douilles 11 et 12 comportent chacune un logement 13 qui leur permet de s'emboîter, sans jeu, sur une goupille 14 associée à l'arbre 10. Ces goupilles 14 sont perpendiculaires à l'arbre 10 et permettent d'immobiliser et de solidariser les douilles 11 et 12 l'une par rapport à l'autre, d'une manière précise.

Les douilles 11 et 12 comportent, à leurs extrémités, des moyens de verrouillage avec leurs bras supports 51.

Chaque douille 11, 12 comporte à son extrémité un contour hexagonal par exemple, qui s'encastre dans un contour similaire aménagé sur les bras 51. Ce contour apparaît figure 3. Il permet d'immobiliser d'une façon simple et efficace les douilles 11 et 12 par rapport aux bras 51.

De préférence, ces pièces à l'exception de l'arbre central, sont réalisées en matériau plastique moulé.

Les bras 51 et 52 sont séparés par une articulation 15 qui est constituée d'un simple amincissement de matière et qui permet un mouvement des bras 51 et 52, l'un par rapport à l'autre.

Ces bras 51 et 52, disposés de part et d'autre du tambour 6 définissent un dièdre dont l'arête passe par les articulations 15.

Ces bras comportent, à leur extrémité, respectivement, des tiges 16 et 17 qui assurent la liaison avec le berceau 2.

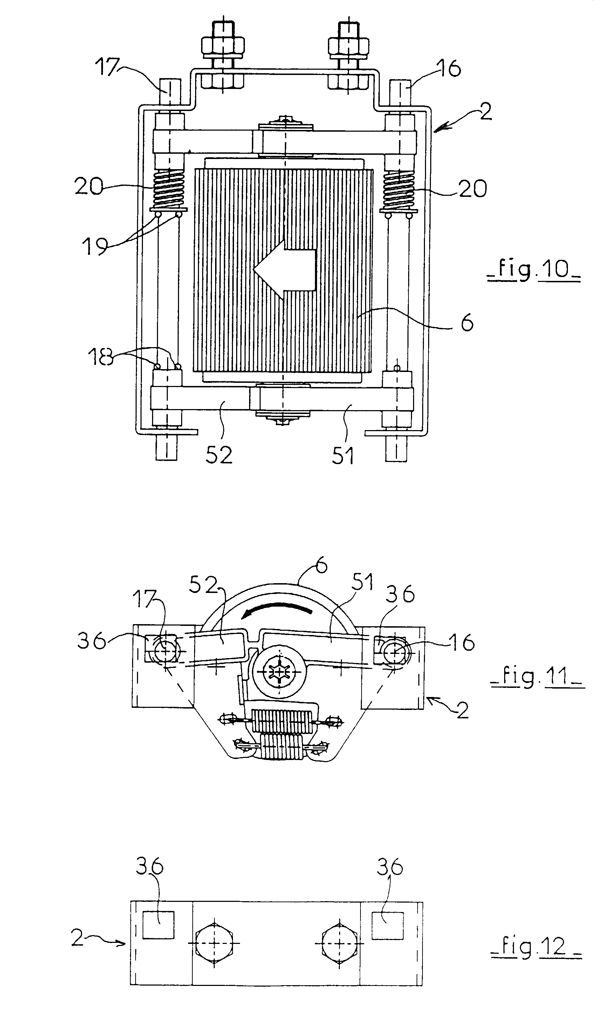

Ces tiges 16 et 17 sont montées coulissantes dans les bras 51 et 52 respectivement, de façon à permettre un escamotage de l'une de leurs extrémités. Elles comportent entre les bras, des butées 18 et 19 en forme de pattes d'éléphant par exemple et, entre les butées 19 et les bras, des ressorts 20 qui permettent d'éclipser leurs extrémités pour faciliter le montage du dispositif dans son berceau et en particulier un berceau du type de celui représenté figures 10 à 12.

Les bras 51 et 52 comportent chacun des goussets 21 et 22 qui s'étendent sous leur plan médian. Ces goussets sont disposés dans un plan perpendiculaire à l'axe de l'arbre 10 du limiteur de vitesse.

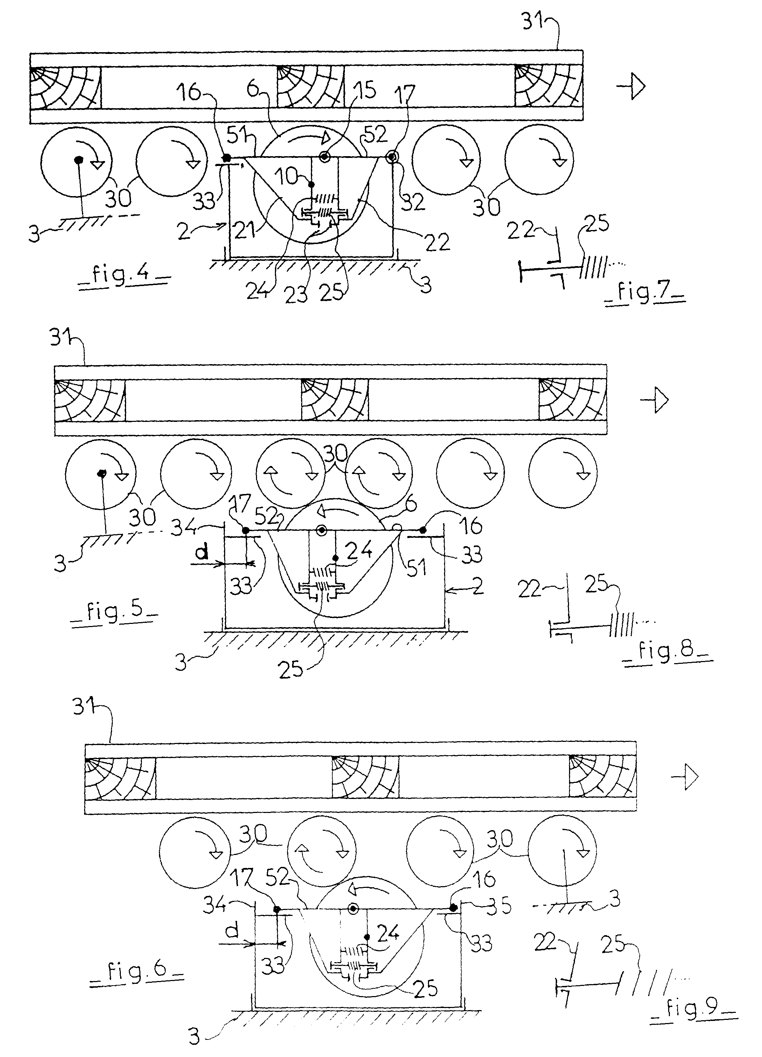

Ces goussets 21 et 22 comportent une butée 23 qui limite l'amplitude du mouvement des bras 51 et 52 autour de l'articulation 15. Un organe élastique 24 en forme de ressort hélicoïdal, tend à rapprocher les goussets 21 et 22 et à les mettre en contact au niveau de la butée 23. Ce premier ressort 24 a une résistance à l'allongement qui est relativement faible, de l'ordre de 1 à 5 newtons/mm par exemple. Ce ressort 24 a pour fonction de maintenir le tambour 6 en saillie dans un montage direct comme représenté figure 4 et de maintenir une pression de contact entre ledit tambour et son vecteur d'entraînement c'est-à-dire la charge constituée d'une palette ou d'une caisse dans le cas d'un montage direct ou le ou les rouleaux intermédiaires dans le cas d'un montage indirect.

En position active normale, lorsque le tambour est éclipsé par une charge, les bras 51 et 52 sont alignés l'un par rapport à l'autre. En position inactive, ils sont légèrement désalignés et l'articulation 15 se situe au-dessous du plan passant par les axes des tiges 16 et 17.

Ce ressort 24 est disposé sous le plan des bras 51, 52, du même côté que l'arbre 10 mais en-dessous de ce dernier. Il est doublé d'un second organe élastique 25 en forme de ressort hélicoïdal également, accroché aux extrémités des goussets 21 et 22. On remarque que ce ressort 25 est positionné dans l'encombrement de l'enveloppe externe du tambour 36, au niveau de sa périphérie, sous le ressort 24. Le ressort 24 est interposé entre le ressort 25 et l'arbre 10 du tambour 6.

Ces deux ressorts 24 et 25 sont disposés sensiblement symétriquement par rapport à un plan vertical passant par l'axe de l'arbre 10. Les goussets 21 et 22 sont conformés en conséquence pour permettre ce positionnement des ressorts 24 et 25. Le gousset 21 en particulier, comporte un évidement sous l'axe 10 du tambour 6, en particulier sous le moyeu 26 du bras 51.

Le bras 51, qui porte le moyeu 26 est plus long que le bras 52. L'articulation 15 est légèrement décalée par rapport au plan vertical médian qui passe par l'axe de l'arbre 10, d'une distance qui est de l'ordre du tiers du rayon du tambour 6.

Le second organe élastique 25 a une action différée par rapport au ressort 24. Il est logé, à ses extrémités, dans des orifices 27 de formes oblongues. Ces orifices 27 sont inclinés par rapport à l'axe du ressort 25 et convergent en un point situé sous ledit ressort. Ce ressort 25 entre en action, c'est-à-dire qu'il est sollicité par les goussets 21 et 22, lorsque les bras 51 et 52 sont désalignés et basculent l'un par rapport à l'autre autour de l'articulation 15, plaçant ladite articulation 15 en-dessous du plan qui passe par les axes des tiges 16 et 17.

Cette situation est provoquée par un freinage important du tambour 6, lequel freinage provoque, sur les bras 51 qui sont solidaires de la douille porte-satellite 11 une réaction qui tend à les faire tourner dans le même sens que le tambour 6.

En fait, le ressort 25 reste inactif lorsque le tambour 6 passe de la position inactive à la position active dans laquelle il est d'une part éclipsé par la charge et, d'autre part, maintenu en contact avec cette dernière par le ressort 24.

Ces réactions sont explicitées plus en détail de façon schématique avec les figures 4 à 9.

La figure 4 représente le montage d'un dispositif limiteur de vitesse dans un couloir constitué de rouleaux 30 disposés en pente sur le bâti 3 pour former un plan incliné sur lequel une palette 31 se déplace par simple gravité, avec sa charge, non représentée.

Ce dispositif limiteur de vitesse est porté par un bercreau 2 qui est solidaire du bâti 3 de l'installation.

Représenté schématiquement, le dispositif est constitué de ses bras 51, 52, séparés par l'articulation 15. Sous les bras 51 et 52 s'étendent, respectivement les goussets 21 et 22. Ces goussets comportent, représentée à leur partie inférieure extrême, la butée 23. Ils sont sollicités en permanence par le ressort 24. Le ressort 25 agit sur les goussets lorsque les bras 51 et 52 basculent l'un par rapport à l'autre, autour de l'articulation 15, sous l'effet du freinage ou du blocage du tambour 6 qui tend à entraîner les bras 51 en rotation.

Par rapport au ressort 24, le ressort 25 a une action différée. Il n'entre en jeu éventuellement qu'après l'éclipsage du tambour sous l'effet du passage d'une charge dont la vitesse est telle qu'elle provoque une réaction de freinage importante du limiteur.

Le bras 52 est solidaire du berceau 2 au moyen de sa tige 17 qui coopère avec une articulation 32 dudit berceau. La tige 16 du bras 51 est simplement posée sur un appui 33 du berceau 2, de façon à pouvoir se déplacer à volonté et en particulier permettre le basculement dudit bras 51 autour de l'articulation 15 qui le sépare du bras 52, lorsque le tambour 6 tend à l'entraîner en rotation.

On remarque, sur les figures 4 à 6, que les bras 51 et 52 sont alignés sensiblement dans un même plan, lorsque le tambour 6 du limiteur de vitesse est en position normale, sollicité en rotation par son vecteur d'entraînement, c'est-à-dire soit une palette 31 soit les rouleaux 30 d'entraînement.

En l'absence de palettes, dans le cas de la figure 4, les bras 51 et 52 basculent vers le haut, positionnant l'articulation 15 au-dessus du plan de leurs appuis comme représenté figure 3. L'angle du dièdre formé par les bras est supérieur à 180° du côté de la zone de contact du tambour 6.

La figure 5 représente un montage indirect du dispositif limiteur de vitesse. Ce dispositif est soutenu par un berceau 2, sous une paire de rouleaux 30. Son tambour 6 est centré automatiquement par rapport à deux rouleaux successifs 30. Ces deux rouleaux sont légèrement en saillie par rapport au plan des autres rouleaux, en l'absence de palettes. Ils sont généralement montés avec un léger jeu vertical qui permet d'obtenir ce léger décalage vertical des rouleaux en contact avec le tambour par rapport aux autres rouleaux qui eux sont libres.

Les tiges 16 et 17 du dispositif limiteur de vitesse sont simplement posées dans le berceau 2, sur deux appuis 33 qui sont plans et parallèles à la surface de circulation des charges. Le dispositif limiteur est partiellement libre dans un plan parallèle à celui du plan dans lequel se déplacent les palettes 31, de façon à pouvoir se centrer automatiquement par rapport aux deux rouleaux 30 avec lesquels le tambour 6 est en contact.

De plus, le berceau est positionné de façon à maintenir l'extrémité du bras 52 et en particulier la tige 17, à une distance d d'une paroi 34 qui constitue une sorte de butée. Cette paroi verticale 34 fait partie du berceau 2 ; elle se situe à l'extrémité de l'appui 33 situé à gauche sur la figure. La distance d est de l'ordre de quelques millimètres, trois à dix environ.

Lorsque le tambour 6 est fortement freiné, sous l'effet de la vitesse, il a tendance à être entraîné par le rouleau 30 qui est situé en amont et à être déplacé, par adhérence, par rapport à son berceau 2. En fait, les tiges des bras 51 et 52 glissent sur les appuis 33 et leur déplacement est limité par la paroi 34. En se déplaçant dans un sens opposé à celui de la palette 31, sous le rouleau amont 30, les bras 51 et 52 basculent autour de l'articulation 15, laquelle articulation se positionne en-dessous du plan passant par les extrémités des bras 51 et 52. Ce basculement des bras 51 et 52 provoque un écartement des extrémités des goussets 21 et 22 et, simultanément, une traction sur les organes élastiques qui contrarient le basculement desdits bras 51 et 52 et accroissent de ce fait la pression du tambour 6 sur le rouleau 30 qui entraîne le tambour 6.

Cette réaction est illustrée schématiquement par les figures 7, 8 et 9.

La figure 7 montre schématiquement une des extrémités de l'organe élastique 25 par rapport aux goussets 22 par exemple. On remarque que dans la position inactive, c'est-à-dire dans la position qui correspond à la figure 3, l'organe élastique 25 est libre par rapport à son gousset support 22, et également par rapport à son gousset 21 non représenté.

La figure 8 représente le ressort 25 dans l'une quelconque des configurations des figures 4 à 6. Dans cette configuration, les bras 51 et 52 sont dans le même plan que l'articulation 15. Le ressort 24 agit seul pour maintenir une pression entre le tambour et son vecteur d'entraînement c'est-à-dire la palette 31 ou les rouleaux 30. Le ressort 25 est toujours inactif dans cette configuration, mais il est prêt à intervenir.

La figure 9 représente le ressort 25 activé par les goussets 21, 22, lorsque, du fait d'une vitesse linéaire importante du vecteur d'entraînement, le tambour 6, fortement freiné, voire bloqué, entraîne son bras support 51 dans un mouvement de rotation qui provoque un désalignement des deux bras autour de l'articulation 15 et un écartement desdits goussets.

Le ressort 25 a une résistance à l'allongement plus importante que celle du ressort 24. Cette résistance peut être de 4 à 8 fois celle du ressort 24, choisie selon les charges, c'est-à-dire de 5 à 40 newtons/mm.

La figure 6 représente une autre possibilité de montage indirect du limiteur de vitesse ; le tambour 6 est en contact avec un seul rouleau 30. Les tiges 16 et 17 des bras 51 et 52 ont leurs extrémités posées sur des appuis 33 du berceau 2. Ce berceau comporte une paroi 35 sur laquelle prennent appui les extrémités de la tige 16 du bras 51 de façon à maintenir un contact et une pression entre le tambour 6 et son rouleau 30 d'entraînement.

Le limiteur de vitesse et en particulier le bras 52 conserve une possibilité de translation en sens inverse du mouvement de la palette 31, pour permettre, lorsque le tambour est fortement freiné, la mise en action du ressort 25. Cette mise en oeuvre du ressort 25 permet d'accroître la pression entre le tambour 6 et le rouleau 30 et d'augmenter l'adhérence. Le ressort 25 permet de contrôler l'adhérence et de la limiter à un certain seuil préétabli, pour éviter toute détérioration du dispositif limiteur de vitesse et en particulier de son mécanisme de freinage.

Comme dans l'exemple de la figure 5, on remarque figure 6, une distance d qui est disponible entre l'extrémité du bras 52 et la paroi 34, pour permettre une translation limitée du dispositif dans le berceau 2. Cette distance d est de l'ordre de trois à dix millimètres environ.

La figure 10 représente un limiteur de vitesse positionné dans un berceau 2. Ce berceau 2 se présente sous la forme d'une bande de tôle pliée de façon à former un cadre ouvert sur un côté du dispositif et qui est munie, de l'autre côté, d'une partie en saillie qui permet sa fixation en déport sur le bâti de l'installation.

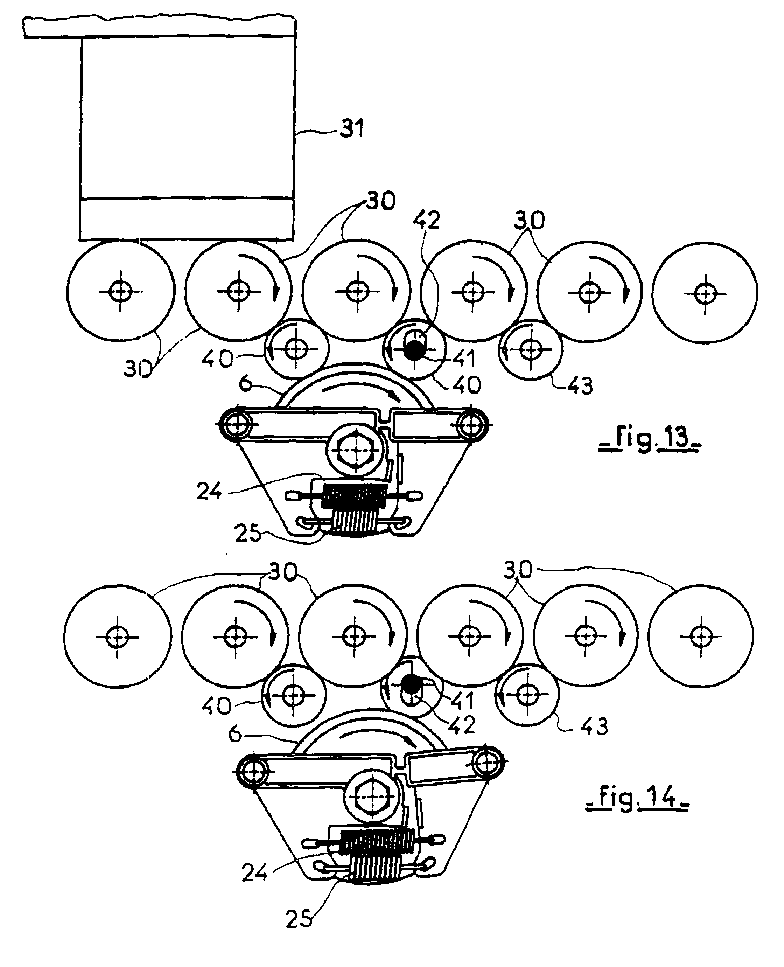

Ce berceau 2 comporte comme représenté figures 11 et 12 des orifices 36 qui permettent le passage des tiges 16 et 17 supportant le dispositif limiteur de vitesse.

Ces orifices ou fenêtres 36 ont des dimensions nettement supérieures au diamètre des tiges 16 et 17 poux permettre le mouvement des bras 51 et 52. On observe ce mouvement lors du passage de la position repos dans le cas d'un montage direct, à une position active dans laquelle les bras sont alignés l'un par rapport à l'autre. On observe également un mouvement des bras lors du passage de la position active à une position de haute sollicitation lorsque le vecteur d'entraînement atteint ou dépasse le seuil de vitesse linéaire qui conduit au blocage du tambour 6. Dans cette position de haute sollicitation, les bras 51 et 52 sont désalignés sous l'effet du blocage du tambour 6.

Un autre mode de réalisation de berceau est représenté figure 3 et partiellement figure 2 ; il comprend des cornières latérales 37 munies d'orifices 38 ouverts à leur partie supérieure pour permettre la dépose du dispositif limiteur de vitesse. Ces cornières 37 sont posées sur des traverses 39 solidaires du bâti 3.

Les orifices 38 ont une longueur qui est supérieure au diamètre des tiges 16 et 17 pour permettre le mouvement de ces dernières.

La figure 13 représente une portion de convoyeur dans une installation de stockage dynamique, constituée d'une multitude de rouleaux 30 qui forment un plan incliné sur lequel se déplacent, par simple gravité, les palettes 31.

Sur cette figure 13, et figure 14, le limiteur de vitesse n'est pas en contact direct avec les rouleaux 30. Le tambour 6 du limiteur de vitesse est en contact avec une paire de galets ou rouleaux 40 qui sont eux-mêmes disposés sous les rouleaux 30.

Ces galets 40 sont en contact avec un même rouleau 30 et avec les autres rouleaux adjacents à ce dernier.

En configuration normale, comme représenté figure 13, le tambour 6 est en contact avec les deux galets intermédiaires 40 avec une pression qui résulte de l'action du ressort 24.

Les galets 40 réalisent une sorte d'accouplement des trois rouleaux 30 situés au-dessus du limiteur de vitesse.

La figure 14 montre le limiteur de vitesse en action lors d'un freinage qui est important et qui met en action les deux ressorts 24 et 25.

Dans cette configuration, le galet 40 en contact aval avec le tambour 6 se déplace légèrement, verticalement. Son axe 41 est guidé dans des glissières 42 en forme de lumières disposées latéralement et orientées verticalement.

Les galets 40 sont réalisés en matériau qui comporte un fort coëfficient d'adhérence, du genre polyuréthane. Ces galets 40 ont un diamètre qui peut être inférieur à celui des rouleaux 30.

Les figures 13 et 14 montrent également un galet ou rouleau intermédiaire 43 supplémentaire situé en aval des galets 40.

Ce galet 43 sert également d'organe d'accouplement entre les rouleaux situés en aval du tambour 6 du limiteur de vitesse.

L'accouplement de plusieurs rouleaux 30 successifs permet d'accroître l'effet de freinage de la palette qui se déplace sur lesdits rouleaux 30.

## Revendications

1. Limiteur de vitesse pour caisses ou palettes susceptibles de se déplacer par gravité sur un plan incliné formé de rouleaux ou galets, lequel limiteur est du type à tambour ou galets (6) pressé directement contre la charge ou indirectement par l'intermédiaire d'au moins un rouleau (30) ou galet du plan incliné, le mouvement de rotation de ce tambour (6) sous l'effet de son vecteur d'entraînement, est contrarié au moyen d'un mécanisme de freinage sensible à la vitesse. lesquels tambour (6) et mécanisme sont montés sur un arbre (10) qui est transversal par rapport au sens d'avancement des charges et qui est maintenu par un support solidaire du bâti dudit plan incliné, lequel support est sollicité en permanence de façon élastique pour instaurer un contact et une pression entre le tambour (6) et ledit vecteur d'entraînement, caractérisé en ce que ledit support est associé audit bâti avec un certain degré de liberté pour lui permettre une déformation par un mouvement de rotation autour d'un axe transversal par rapport au mouvement de la charge et en qu'il comporte des moyens élastiques qui établissent un premier niveau d'accroissement de la pression par suite d'une première résistance à la déformation dudit support, et qui, en combinaison avec le mouvement de rotation dudit support lors d'un freinage important, tendent par suite d'une seconde résistance à la déformation, plus importante, à augmenter le niveau d'accroissement de la pression entre le tambour (6) et son vecteur d'entraînement pour établir un second niveau de l'accroissement de l'adhérence, supérieur au premier, limité à un seuil déterminé pour éviter tout incident sur le mécanisme de freinage notamment.

2. Dispositif limiteur de vitesse selon la revendication 1, du type constitué d'un support formé de deux poutres (5) disposées latéralement de part et d'autre dudit tambour, lesquelles poutres sont formées chacune de deux bras (51, 52), séparés par une articulation (15): - un bras amont porteur de l'arbre (10) du tambour (6), qui s'étend entre des moyens d'appui sur ledit bâti et ladite articulation et, - un bras aval (52) qui s'étend entre cette dernière et d'autres moyens d'appui sur ledit bâti, lesquels bras définissent un dièdre dont l'arête, qui correspond à ladite articulation (15), est parallèle audit arbre (10) du tambour, et ses bras sont par ailleurs munis de goussets (21, 22), respectivement, disposés dans un plan perpendiculaire audit arbre (10), lesquels goussets portent une butée (23) qui, en position repos, maintient les bras légèrement désalignés en positionnant l'axe (15) au-dessus du plan passant par leurs extrémités, lesquels goussets supportent de plus un organe élastique qui les sollicite en permanence de façon à établir un contact entre le tambour (6) et son vecteur d'entraînement, caractérisé en ce qu'il comporte, d'une part des moyens de liaison partielle entre ces bras (51, 52) et les moyens d'appui sur le bâti pour organiser le mouvement desdits bras, lequel mouvement est contrarié par au moins deux organes élastiques montés sur les goussets: - un premier organe élastique (24) dont la résistance à l'allongement est faible pour permettre l'éclipsage du tambour lors du passage d'une charge et pour maintenir le tambour (6) en contact avec son vecteur d'entraînement sous une faible pression et, - un second organe élastique (25), dont la résistance à l'allongement est plus importante, positionné sur les goussets de façon à agir sur lesdits goussets pour tendre à maintenir les bras (51 et 52) alignés en particulier lorsque, sous l'effet d'un freinage important du tambour (6), le bras (51) bascule autour de l'articulation (15), entraîné par le tambour (6).

3. Limiteur de vitesse selon la revendication 2, caractérisé en ce que les goussets (21, 22) comportent des moyens en forme de trous oblongs (27), pour offrir un jeu suffisant au second organe élastique (25) afin de lui permettre de rester inactif lorsque le tambour (6) passe de la position inactive à la position dans laquelle il est d'une part éclipsé par la charge et, d'autre part, maintenu en contact avec cette dernière par le premier organe élastique (24).

4. Limiteur de vitesse selon l'une quelconque des revendications 2 ou 3, caractérisé en ce qu'il comporte un premier organe élastique (24) en forme de ressort hélicoïdal dont la résistance à l'allongement est de l'ordre de 1 à 5 newtons/mm.

5. Limiteur de vitesse seion l'une quelconque des revendications 2 à 4, caractérisé en ce que le second organe élastique (25), en forme de ressort hélicoïdal, comporte une résistance à l'allongement comprise entre 5 et 40 newtons/mm.

6. Limiteur de vitesse selon l'une quelconque des revendications 2 à 5, caractérisé en ce que les bras (51, 52) comportent, à leur extrémité, des tiges transversales (16, 17), positionnées dans un berceau (2) qui est fixé sur le bâti (3), lequel berceau comporte des orifices (36, 38) dont les dimensions sont supérieures au diamètre desdites tiges de façon à accorder à l'une au moins de ces tiges, une liberté de mouvement lui permettant de se déplacer de façon contrôlée dans un plan parallèle au plan de déplacement de la charge.

7. Limiteur de vitesse selon la revendication 6, caractérisé en ce que les fenêtres (36) du berceau ont une hauteur supérieure au diamètre des tiges (16, 17) permettant, à la tige des bras amont (51) notamment, une liberté de mouvement en direction de la charge.

8. Limiteur de vitesse selon la revendication 2, caractérisé en ce que l'arbre (10) du tambour (6) et du mécanisme de freinage comporte des moyens de solidarisation des deux bras amont (51) l'un par rapport à l'autre.

9. Limiteur de vitesse selon la revendication 8, caractérisé en ce que l'arbre (10) du tambour comporte deux goupilles (14) ou clavettes, coopérant chacune avec un logement (13) aménagé dans la douille (11, 12) des paliers latéraux, chaque douille coopérant avec l'un des bras amont (51) par un assemblage verrouillé en rotation.

10. Limiteur de vitesse selon l'une quelconque des revendications 2 à 9, caractérisé en ce que les tiges (16, 17) des poutres (5), sont mobiles parallèlement à l'arbre (10), comportant chacune deux butées (18, 19) entre lesdites poutres et un ressort (20) entre l'une des butées (19) et l'une des poutres, pour permettre l'éclipsage de l'une des extrémités desdites tiges (16, 17) pour faciliter le montage du limiteur dans son berceau support.

11. Limiteur de vitesse selon la revendication 10, caractérisé en ce que le berceau (2) est constitué d'une bande de tôle pliée de façon à former un cadre ouvert sur l'un des côtés du limiteur et munie, à l'opposé du côté ouvert, d'une partie saillante qui permet la fixation dudit cadre en déport, sur ledit bâti du plan incliné.

12. Installation de stockage dynamique munie d'au moins un limiteur de vitesse selon l'une quelconque des revendications 1 à 11, caractérisée en ce qu'elle comporte, sous les rouleaux (30) formant un plan incliné, des galets ou rouleaux intermédiaires (40) en contact d'une part avec lesdits rouleaux (30) et, d'autre part, avec le tambour (6) dudit limiteur, lorsque ce dernier est en régime normal de freinage.

13. Installation de stockage dynamique selon la revendication 12, caractérisée en ce que le galet intermédiaire (40) qui est en contact aval avec le tambour (6) du limiteur de vitesse, comporte un axe (41) guidé dans des lumières latérales (42) orientées verticalement.

14. Installation de stockage dynamique selon l'une quelconque des revendications 12 et 13, caractérisée en ce qu'elle comporte, disposé en aval des galets (40), au moins un galet ou rouleau (43) constituant un organe d'accouplement entre deux rouleaux (30) situés en aval du tambour (6) du limiteur de vitesse.

## Patentansprüche

1. Geschwindigkeitsbegrenzer für Kästen oder Paletten, die fähig sind, sich durch Schwerkraft auf einer von Rollen oder Walzen gebildeten, geneigten Ebene zu bewegen, welcher Begrenzer vom Trommel- oder Walzentyp (6) ist, wobei die Trommel direkt oder indirekt mittels wenigstens einer Rolle (30) oder Walze der geneigten Ebene gegen die Last gedrückt wird, wobei der Drehbewegung dieser Trommel (6) unter der Wirkung ihres Antriebsvektors mittels eines auf die Geschwindigkeit ansprechenden Bremsmechanismus entgegenwirkt wird, wobei die Trommel (6) und der Mechanismus auf einer Welle (10) angebracht sind, die hinsichtlich der Richtung der Vorwärtsbewegung der Lasten quer verläuft und die von einem Halter gehalten wird, der mit dem Unterteil der geneigten Ebene fest verbunden ist, wobei der Halter dauernd derart elastisch beansprucht wird, um einen Kontakt und einen Druck zwischen der Trommel (6) und dem Antriebsvektor zu schaffen, dadurch gekennzeichnet, daß der Halter mit dem Unterteil mit einem gewissen Freiheitsgrad verbunden ist, um ihm eine Deformation durch eine Drehbewegung um eine Querachse in bezug auf die Lastbewegung zu erlauben, und daß der Begrenzer elastische Mittel aufweist, die eine erste Niveauzunahme des Drukkes infolge eines ersten Widerstandes gegen die Deformation des Halters aufbauen und die in Kombination mit der Drehbewegung des Halters bei einer starken Bremsung infolge eines zweiten Widerstandes gegen die größere Deformation dazu neigen, die Niveauzunahme des Druckes zwischen der Trommel (6) und ihrem Antriebsvektor zu vergrößern, um eine zweite Niveauzunahme der Haftung größer als die erste aufzubauen, die auf einen bestimmten Grenzwert begrenzt ist, um jede Störung insbesondere auf den Bremsmechanismus zu vermeiden.

2. Geschwindigkeitsbegrenzer-Vorrichtung nach Anspruch 1 des Typs, der aus einem Halter besteht, der von zwei Trägern (5) gebildet ist, die seitlich beiderseits der Trommel angeordnet sind, welche Träger jeweils von zwei durch ein Gelenk (15) getrennten Armen (51, 52) gebildet sind: - einem stromaufwärtigen Tragarm (51) für die Welle (10) der Trommel (6), der sich zwischen den Stützmitteln am Unterteil und dem Gelenk erstreckt, und - einem stromabwärtigen Arm (52), der sich zwischen diesem letzteren und weiteren Stützmitteln am Unterteil erstreckt, welche Arme einen Dieder definieren, dessen Kante, die dem Gelenk (15) entspricht, parallel zur Welle (10) der Trommel verläuft, und seine Arme außerdem jeweils mit Eckstücken (21, 22) versehen sind, die in einer zur Welle (10) senkrechten Ebene angeordnet sind, welche Eckstücke einen Anschlag (23) tragen, der in Ruheposition den Arm leicht fehlausgerichet hält, wobei die Achse (15) über der durch ihre Enden gehenden Ebene positioniert wird, welche Eckstücke außerdem ein elastisches Organ tragen, das dauernd beansprucht wird, so daß ein Kontakt zwischen der Trommel (6) und ihrem Antriebsvektor aufgebaut ist, dadurch gekennzeichnet, daß sie einerseits Mittel zur teilweisen Verbindung zwischen diesen Armen (51, 52) und den Stützmitteln am Unterteil aufweist, um die Bewegung der Arme zu organisieren, welche Bewegung durch wenigstens zwei an den Eckstücken angebrachte, elastische Organe gehindert wird: - durch ein erstes elastisches Organ (24), dessen Streckfestigkeit gering ist, um das Verschwinden der Trommel bei Durchgang einer Last zu gestatten und um die Trommel (6) unter schwachem Druck mit ihrem Antriebsvektor in Kontakt zu halten - und ein zweites elastisches Organ (25), dessen Streckfestigkeit größer ist, das auf den Eckstücken positioniert ist, so daß es auf die Eckstücke einwirkt, um dazu zu neigen, die Arme (51 und 52) ausgerichtet zu halten, insbesondere wenn unter der Wirkung einer starken Bremsung der Trommel (6) der Arm (51), angetrieben durch die Trommel (6), um das Gelenk kippt.

3. Geschwindigkeitsbegrenzer nach Anspruch 2, dadurch gekennzeichnet, daß die Eckstücke (21, 22) Mittel in Form von länglichen Löchern (27) aufweisen, um einen für das zweite elastische Organ (25) ausreichenden Spielraum zu bieten, um ihm zu gestatten, inaktiv zu bleiben, wenn die Trommel (6) von der inaktiven Position zu der Position übergeht, in der sie einerseits durch die Last verschwunden ist und andererseits durch das erste elastische Organ (24) mit dieser letzteren in Kontakt gehalten wird.

4. Geschwindigkeitsbegrenzer nach einem der Ansprüche 2 oder 3, dadurch gekennzeichnet, daß er ein erstes elastisches Organ (24) in Form einer Wendelfeder aufweist, deren Streckfestigkeit von der Größenordnung von 1 bis 5 N/mm ist.

5. Geschwindigkeitsbegrenzer nach einem der Ansprüche 2 bis 4, dadurch gekennzeichnet, daß das zweite elastische Organ (25) in Form einer Wendelfeder eine Streckfestigkeit zwischen 5 und 40 N/mm aufweist.

6. Geschwindigkeitsbegrenzer nach einem der Ansprüche 2 bis 5, dadurch gekennzeichnet, daß die Arme (51, 52) an ihrem Ende quer verlaufende Stangen (16, 17) aufweisen, die in einem Fuß (2) positioniert sind, der am Unterteil (3) befestigt ist, welcher Fuß Öffnungen (36, 38) aufweist, deren Abmessungen größer als der Durchmesser der Stangen sind, so daß wenigstens einer dieser Stangen ein Bewegungsspielraum zugeteilt wird, der ihr gestattet, sich kontrolliert in einer zur Ebene der Verschiebung der Last parallelen Ebene zu verschieben.

7. Geschwindigkeitsbegrenzer nach Anspruch 6, dadurch gekennzeichnet, daß die Fenster (36) des Fußes eine Höhe aufweisen, die größer als der Durchmesser der Stangen (16, 17) ist, die insbesondere der Stange des stromaufwärtigen Armes (51) einen Bewegungsspielraum in Richtung der Last gestattet.

8. Geschwindigkeitsbegrenzer nach Anspruch 2, dadurch gekennzeichnet, daß die Welle (10) der Trommel (6) und des Bremsmechanismus Mittel zur festen Verbindung der beiden stromaufwärtigen Arme (51) miteinander aufweisen.

9. Geschwindigkeitsbegrenzer nach Anspruch 8, dadurch gekennzeichnet, daß die Welle (10) der Trommel zwei Stifte (14) oder Keile aufweist, die jeweils mit einer Aufnahme (13) zusammenarbeiten, die in der Hülse (11, 12) der Seitenlager angebracht ist, wobei jede Hülse mit einem der stromaufwärtigen Arme (51) durch eine in Rotation verriegelte Anordnung zusammenarbeitet.

10. Geschwindigkeitsbegrenzer nach einem der Ansprüche 2 bis 9, dadurch gekennzeichnet, daß die Stangen (16, 17) der Träger (5) parallel zur Welle (10) beweglich sind, die jeweils zwei Anschläge (18, 19) zwischen den Trägern und eine Feder (20) zwischen einem der Anschläge (19) und dem einen Träger aufweisen, um das Verschwinden eines der Enden der Stangen (16, 17) zu gestatten, um das Anbringen des Begrenzers in seinem Tragfuß zu erleichtern.

11. Geschwindigkeitsbegrenzer nach Anspruch 10, dadurch gekennzeichnet, daß der Fuß (2) aus einem Blechstreifen besteht, der so gebogen ist, daß er einen auf der einen Seite des Begrenzers offenen Rahmen bildet und entgegengesetzt zur offenen Seite mit einem vorstehenden Teil versehen ist, der die versetzte Befestigung des Rahmens am Unterteil der geneigten Ebene gestattet.

12. Dynamische Lagerhaltungsanlage, die mit wenigstens einem Geschwindigkeitsbegrenzer nach einem der Ansprüche 1 bis 11 versehen ist, dadurch gekennzeichnet, daß sie unter den Rollen (30), die die geneigte Ebene bilden, Zwischenwalzen oder -rollen (40) aufweisen, die einerseits mit den Rollen (30) und andererseits mit der Trommel (6) des Begrenzers in Kontakt stehen, wenn sich dieser letztere im normalen Bremsbereich befindet.

13. Dynamische Lagerhaltungsanlage nach Anspruch 12, dadurch gekennzeichnet, daß die Zwischenwalze (40), die stromabwärts mit der Trommel (6) des Geschwindigkeitsbegrenzers in Kontakt steht, eine Achse (41) aufweist, die in vertikal orientierten, seitlichen Schlitzen (42) geführt ist.

14. Dynamische Lagerhaltungsanlage nach einem der Ansprüche 12 und 13, dadurch gekennzeichnet, daß sie wenigstens eine stromabwärts der Walzen (40) angeordnete Walze oder Rolle (43) aufweist, die ein Kupplungsorgan zwischen den beiden Rollen (30) bildet, die sich stromabwärts der Trommel (6) des Geschwindigkeitsbegrenzers befindet.

## Claims

1. A speed limiter for boxes or pallets, capable of gravity displacement over a tilted plane formed of cylinders or rollers, whereas the said limiter is fitted with cylinder or rollers (6), the latter being pressed directly against the load or indirectly via at least one cylinder (30) or roller of the tilted plane, whereas the rotation movement of this drum (6) under the effect of its driving vector is impaired via a speed-sensitive braking mechanism, whereas the said drum (6) and mechanism are mounted on a shaft (10) which is transversal in relation to the feed direction of the loads and which is maintained by a bracket connected rigidly to the stucture of the said tilted plane, whereas the said bracket is stressed permanently and elastically in order to generate a contact and a pressure between the drum (6) and the said driving vector, characterised in that the said bracket is connected to the said structure with a certain degree of liberty in order to allow the former a certain deformation by a rotation movement round a transversal axis with respect to the movement of the load and that it comprises elastic means which create a first level of increased pressure further to a first resistance to deformation of the said bracket and which, in combination with the rotation movement of the said bracket during heavy braking, tend further to a second resistance to deformation, greater than the former, to raise the level of increased pressure between the drum (6) and its driving vector in order to create a second level of increased adherence, higher than the first, limited to a pre-set threshold in order to avoid any incident, especially to the braking mechanism.

2. A speed limiting device according to claim 1, of the type constituted of a bracket formed of two beams (5) arranged laterally on either side of the said drum, whereas the said beams are each formed of two arms (51, 52) separated by an articulation (15) : - an upstream arm carrying the shaft (10) of the drum (6), which lies between resting means on the said structure and the said articulation and, - a downstream arm (52) which lies between the said articulation and other resting means on the said structure, whereas the said arms determine a dihedron whose edge, which corresponds to the said articulation (15), is parallel to the said shaft (10) of the drum and, moreover, its arms are fitted with gussets (21, 22), respectively, arranged in a plane perpendicular to the said shaft (10), whereas the said gussets carry a stop (23) which, when in home position, maintains the arms slightly disaligned while positioning the axis (15) above the plane passing through their ends, whereby the said gussets also support an elastic element which stresses the former permanently, in order to create a contact between the drum (6) and its driving vector, characterised in that it comprises, on the one hand, means for partial linking between these arms (51, 52) and the resting means on the structure in order to organise the movement of the said arms, whereas the said movement is impaired by at least two elastic elements mounted on the gussets ; - a first elastic element (24) whose yield strength is low to allow retraction of the drum during the passage of a load and to maintain the drum (6) in contact with its driving vector under a low pressure and, - a second elastic element (25), whose yield strength is higher, positioned on the gussets to act on the said gussets in order to attempt maintaining the arms (51 and 52) aligned especially when, under the effect of heavy braking of the drum (6), the arm (51) pivots round the articulation (15), driven by the drum (6).

3. A speed limiter according to claim 2, characterised in that the gussets (21, 22) comprise means in the form of oblong holes (27), to provide sufficient clearance to the second elastic element (25) in order to enable it to remain inactive when the drum (6) switches from the inactive position to the position in which it is retracted by the load on the one hand and maintained in contact with the latter by the first elastic element (24) on the other.

4. A speed limiter according to any of the claims 2 or 3, characterised in that it comprises a first elastic element (24) in the form of a helicoid spring whose yield strength ranges between 1 and 5 Newton/mm.

5. A speed limiter according to any of the claims 2 to 4, characterised in that the second elastic element (25), in the form of a helicoid spring, exhibits a yield strength ranging between 5 and 40 Newton/mm.

6. A speed limiter according to any of the claims 2 to 5, characterised in that the arms (51, 52) comprise, at their ends, transverse rods (16, 17), positioned in a cradle (2) which is fixed to the structure (3), whereby the said cradle contains orifices (36, 38) whose sizes are greater than the diameter of the said rods in order to grant, at least to one of these rods, a liberty of movement enabling it to move in a controlled fashion in one plane parallel to the displacement plane of the load.

7. A speed limiter according to claims 6, characterised in that the height of the windows (36) of the cradle is greater than the diameter of the rods (16, 17) providing, the rod of the upstream arms (51) especially, a liberty of movement towards the load.

8. A speed limiter according to claim 2, characterised in that the shaft (10) of the drum (6) and of the braking mechanism comprises means for connecting both upstream arms (51) with respect to one another.

9. A speed limiter according to claim 8, characterised in that the shaft (10) of the drum comprises two pins (14) or keys, each working together with a recess (13) accommodated in the bush (11, 12) of the lateral bearings, each bush working together with one of the upstream arms (51) thanks to a rotation-locked assembly.

10. A speed limiter according to any of the claims 2 to 9, characterised in that the rods (16, 17) of the beams (5), are mobile parallel to the shaft (10), each comprising two stops (18, 19) between the said beams and a spring (20) between one of the stops (19), and one of the beams, to allow retraction of one of the ends of the said rods (16, 17) in order to facilitate the assembly of the speed limiter in its supporting cradle.

11. A speed limiter according to claim 10, characterised in that the cradle (2) is constituted of a folded sheet metal strip in order to form an open frame on one side of the speed limiter and fitted, opposite the open side, with a cantilever portion, allowing the said cantilever frame to be fastened on the said structure of the tilted plane.

12. A dynamic storage facility fitted with at least one speed limiter according to any of the claims 1 to 11, characterised in that it comprises, under the cylinders (30) forming a tilted plane, intermediate rollers or cylinders (40) in contact with the said cylinders (30) on the one hand and the drum (6) of the said speed limiter on the other, when the latter is in normal braking mode.

13. A dynamic storage facility fitted with at least one speed limiter according to claim 12, characterised in that the intermediate roller (40) which is in downstream contact with the drum (6) of the speed limiter, comprises an axis (41) guided in lateral ports (42) oriented vertically.

14. A dynamic storage facility fitted with at least one speed limiter according to any of the claims 12 or 13, characterised in that it contains, arranged downstream of the rollers (40), at least one roller or cylinder (43) constituting a coupling element between two cylinders (30) located downstream of the drum (6) of the speed limiter.
